# EUROPÄISCHE PATENTSCHRIFT

(11) **EP 0 557 824 B1**
(45) Veröffentlichungstag und Bekanntmachung des Hinweises auf die Patenterteilung: **04.10.1995**
(21) Anmeldenummer: 93102226.3
(22) Anmeldetag: 12.02.1993
(51) Int. Cl.: B65G 57/22

(54) **Verfahren zum Errichten von Plattenstapeln sowie Einrichtung zur Durchführung des Verfahrens**
Method of assembling stacks of panels and device for carrying out the method
Procédé pour établir des piles de plaques et dispositif pour la mise en oeuvre de ce procédé

(30) Priorität: 24.02.1992 DE 4205613
(43) Veröffentlichungstag der Anmeldung: 01.09.1993
(73) Patentinhaber: HOLZMA-MASCHINENBAU GmbH, D-75365 Calw (DE)
(72) Erfinder: Burkhardt, Roland, W-7264 Bad Teinach-Zavelstein (DE); Kussmaul, Volker, W-7048 Bondorf (DE); Hohl, Stefan, W-7000 Stuttgart 80 (DE)
(74) Vertreter: Becker, Maria, Dipl.-Phys.

(56) Entgegenhaltungen:
- EP-A- 0 422 600
- DE-A- 3 107 495
- DE-A- 3 541 743
- DE-A- 3 631 209

## Beschreibung

Die Erfindung betrifft ein Verfahren mit den im Oberbegriff des Anspruches 1 erläuterten Verfahrensschritten sowie eine Einrichtung zur Durchführung dieses Verfahrens mit den Merkmalen des Oberbegriffs von Anspruch 4.

In der Fachwelt wird unter dem Begriff "Stapelbild" einerseits eine Anordnung von durch Aufteilen einer Rohplatte angefallenen Werkstückplatten gleichen Formates verstanden, die einzeln oder in einer gewünschten Formation nebeneinander abgelegt sind; andererseits kann es sich dabei aber anstelle einzelner Werkstückplatten ebenso um zueinander benachbarte, aus einer relativ kleinen Anzahl von einzelnen Werkstückplatten gebildeten Plattenstapeln, im folgenden "Plattenteilstapel" genannt, handeln.

Solche Plattenteilstapel fallen an, wenn in Plattenaufteilsägen zwei oder mehr aufeinanderliegende Rohplatten gemäss einem gewünschten Aufteilbild gemeinsam aufgeteilt werden.

Ein Verfahren gemäss dem Oberbegriff des Anspruches 1, mit dessen Hilfe sich aus einer gewünschten Anzahl von kantenbündig aufeinanderliegenden Werkstückplatten gleichen Formates oder ebensolchen Plattenteilstapeln einzelne Plattenstapel aufbauen lassen, ist aus DE-A-35 41 743 bekannt.

Hierbei werden durch Aufteilen von gleich grossen, aufeinanderliegenden Rohplatten hinter einer Plattenaufteilsäge anfallende Plattenteilstapel zunächst entlang einer Förderstrecke im Abstand hintereinander zu einer Stoppstelle gefördert und von dort, zum Parken in einer Parkstation ausserhalb der Förderstrecke, quer zu ihrer Anlieferrichtung an die Stoppstelle wegtransportiert.

In der Parkstation wird zunächst eine vorbestimmte Anzahl von einzelnen Plattenteilstapeln gesammelt, indem durch den erneuten Antransport von Plattenteilstapeln bereits geparkte Plattenteilstapel in Anlieferrichtung entsprechend verschoben werden.

Ist in der Parkstation eine vorbestimmte Anzahl von Plattenteilstapeln ausgerichtet aufgereiht, wird diese Plattenteilstapelreihe quer zu ihrer Anlieferrichtung auf einen Hubtisch abgesetzt. Dies wird mittels einer Transportvorrichtung in Form eines Hubgreifers bewerkstelligt, der einerseits auf den Hubtisch mehrere Reihen hintereinander und auch übereinander ablegt, so dass die Plattenstapel auch die gewünschte Höhe erhalten. Nach ihrer Fertigstellung werden diese zu einer Übernahmestation transportiert.

Aufgabe der Erfindung ist es, ein Verfahren der vorstehend erläuterten Art dadurch rationell und platzsparend zu gestalten, dass schon während des Parkens eine entsprechend grosse Anzahl von Werkstückplatten und Plattenteilstapeln (Stapelbilder) bereitstellbar und für den Abtransport dieses Plattengutes lediglich ein einziger Verfahrensschritt erforderlich ist.

Diese Aufgabe wird erfindungsgemäss durch die kennzeichnenden Merkmale des Anspruches 1 gelöst.

Der mit dem Parken kombinierte Verfahrensschritt der Verlagerung eines Teils des geparkten Plattengutes in die Warteposition bietet den Vorteil, eine gewünschte Anzahl von Werkstückplatten oder Plattenteilstapeln für deren gemeinsamen Abtransport in eine Abstapelstation ansammeln zu können, ohne dass hierzu, in Querrichtung zur Förderstrecke betrachtet, ein entsprechend grosser Platzbedarf erforderlich wird.

Ausserdem erlaubt die Verlagerung von geparktem Stapelgut in eine Warteposition, in entsprechend kurzen Zeitabständen erneut Stapelgut einparken und mit entsprechend hohen Taktzeiten arbeiten zu können.

Dabei sei erwähnt, dass es zum orientierten Ablegen von Papierformaten bereits bekannt ist, diese quer zu einer Förderstrecke vor dem Abstapeln zunächst zu parken und dabei in eine Warteposition zu verschieben.

So wird bei einer Verfahrensweise gemäss DE-A-31 07 495 am Ende der Förderstrecke eine Reihe von Zuschnittstapeln gebildet, die anschliessend quer zur Anlieferrichtung zum Parken auf einen Formationstisch abtransportiert wird, wobei durch den erneuten Antransport einer Reihe von Zuschnittstapeln die bereits geparkten Zuschnittstapel auf dem Formationstisch in eine Warteposition verschoben werden.

Nach dem Parken einer vorbestimmten Anzahl von Zuschnittstapelreihen werden diese dann gemeinsam auf einen Übergabewagen aufgeschoben, der zur Stapelübergabe vor eine Palette abgesenkt wird, auf die anschliessend die Zuschnittstapelreihen von der Seite her aufgeschoben werden.

Abgesehen davon, dass diese Verfahrensweise für Einzelzuschnitte nicht praktikabel ist, werden die Zuschnittstapel in der Parkstation nicht parallel zur Förderstrecke in ihre Warteposition verschoben, und es ist auch nicht möglich, mehrere Zuschnittstapel aufeinanderzustapeln.

Bei einer Verfahrensweise gemäss DE-A-36 31 209 werden Stapel aus Papier gleichen Formates ebenfalls in der vorstehend erläuterten Weise nach dem Anfördern geparkt und reihenweise einer Warteposition zugeführt. Hier ermöglicht zudem ein spezieller Übergabewagen reihenweise zusammengestellte Papierstapel auch auf eine Palette aufeinanderzustapeln; jedoch werden geparkte Reihen von Papierstapeln auch hier quer zur Förderstrecke in ihre Warteposition gesteuert. Des weiteren ist es auch in diesem Falle nicht möglich, Papierformate als Einzelzuschnitte reihenweise abzustapeln.

Beim erfindungsgemässen Verfahren erfolgt der Transport von Stapelbildern bevorzugt gemäss Anspruch 2.

Die Erfindung ermöglicht es schliesslich, auch in unterschiedlichen Formaten anfallende Werkstückplatten oder Plattenteilstapel eines Aufteilbildes Plattenformat für Plattenformat zu stapeln, sofern solches Plattengut gemäss Anspruch 3 entlang der Förderstrecke an den einzelnen Plattenformaten zugeordneten Stoppstellen programmgesteuert aufgehalten und dann zum Ausrichten, Parken und Abstapeln abtransportiert wird.

Weiterer Gegenstand der Erfindung ist eine Einrichtung gemäss Patentanspruch 4 zur Durchführung des Verfahrens, wobei vorteilhafte Ausgestaltungen derselben Gegenstand der Ansprüche 5 bis 10 sind.

In der Zeichnung ist die Einrichtung beispielsweise in drei möglichen Anordnungen schematisch dargestellt, wobei diese jeweils in Draufsicht gezeigt sind.

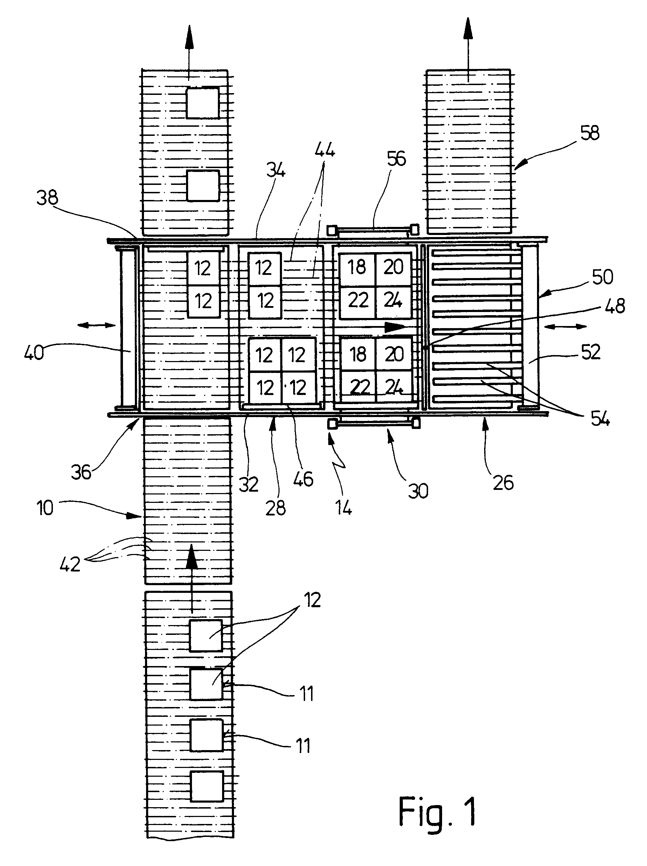

Die Einrichtung gemäss Fig. 1 weist eine Förderstrecke, vorzugsweise in Form einer mit Friktionsantrieb umlaufende Rollen aufweisenden Transportrollenbahn 10, auf, auf welcher Werkstückplatten 11, vorzugsweise gleichen Formates, von einer nicht gezeigten Plattenaufteilsäge weggefördert werden. Diese sind Bestandteil eines auf der Plattenaufteilsäge durch gleichzeitiges Aufteilen mehrerer, aufeinandergelegter Rohplatten erzeugten Aufteilbildes.

Die aufeinanderliegenden Werkstückplatten 11 gleicher Abmessung bilden Plattenteilstapel 12, die - in Förderrichtung gesehen - im gegenseitigen Abstand, d.h. vereinzelt, einer als Ganzes mit 14 bezeichneten Aufstapelvorrichtung zugefördert werden.

Anstelle von Plattenteilstapeln 12 kann das Plattengut auch lediglich aus einzelnen Werkstückplatten 11 bestehen. Jede einer solchen einzelnen Werkstückplatte 11 oder jeder Plattenteilstapel 12, der zur Weiterverarbeitung anfällt, wird in der Fachsprache als "Stapelbild" bezeichnet.

Die Aufstapelvorrichtung 14 dient, was unten noch näher erläutert wird, dazu, vorzugsweise aus einer Vielzahl von Stapelbildern gleichzeitig sukzessive eine gleiche Anzahl von Plattenstapeln 18, 20, 22, 24 zu errichten und diese einer Übernahmestation 26 zuzuführen.

Die Aufstapelvorrichtung 14 weist zum gegenseitig ausgerichteten Zusammenstellen von Plattenteilstapeln 12 eine Parkstation 28 sowie zum Aufstapeln von in der Parkstation 28 bereitgestellten Plattenteilstapeln 12 eine Stapelstation 30 auf, an die sich die Übernahmestation 26 anschliesst.

Parkstation 28, Stapelstation 30 und Übernahmestation 26 sind, hintereinanderliegend, miteinander verkettet, wobei sich die Parkstation 28 neben der Transportrollenbahn 10 befindet.

Die Aufstapelvorrichtung 14 weist zwei horizontal und einander parallel zugeordnete, sich über die Stationen 26, 28 und 30 sowie die Transportrollenbahn 10 erstreckende, schienenartige Führungsträger 32 und 34 auf. Der sich zwischen diesen befindende Bereich der Transportrollenbahn 10 bildet eine der Parkstation 28 vorgeschaltete Übergabestation 36, die einen sich quer zur Förderrichtung erstreckenden, programmgesteuert anheb- und absenkbaren Plattenanschlag 38 sowie ein Übergabe- und Ausrichtlineal 40 aufweist, das zwischen den Führungsträgern 32 und 34 an diesen geführt ist und dazu dient, in der Übergabestation 36 angelangte und mittels des Plattenanschlages 38 auf der Transportrollenbahn 10 stillgesetzte Plattenteilstapel 12 in die Parkstation 28 einzuschieben.

Im Bereich der Übergabestation 36 ist die Transportrollenbahn 10 zusätzlich mit Querförderrollen ausgestattet, die einfachheitshalber nicht dargestellt sind. Querförderrollen und Transportrollen der Transportrollenbahn 10 sind in der Höhe relativ zueinander verstellbar. Vorzugsweise sind die Querförderrollen über die durch die Transportrollen definierte Förderebene der Transportrollenbahn 10 anhebbar und definieren in dieser Stellung eine zu einer Auflageebene der Parkstation 28 koplanare Förderebene.

Die Parkstation 28 weist zu den durch strichpunktierte Linien angedeuteten Rollenachsen 42 der Transportrollenbahn 10 achsparallel gelagerte Transportrollen auf, deren Rollenachsen mit 44 bezeichnet sind und die, analog zu den Rollenachsen 42 der Transportrollenbahn 10, mit Friktionsantrieb und vorzugsweise zu diesen in entgegengesetzter Richtung umlaufen.

Die durch die Transportrollen der Parkstation 28 innerhalb derselben definierte Förderstrecke ist durch einen stationären Ausrichtanschlag 46 begrenzt.

Die Parkstation 28 kann ausserdem noch, analog zur Übergabestation 36, mit anheb- und absenkbaren Querförderrollen ausgestattet sein, um in der Parkstation 28 für das Aufstapeln zusammengestellte Plattenteilstapel 12 bzw. Stapelbilder mittels des Übergabe- und Ausrichtlineals 40 gemeinsam in die Stapelstation 30 einschieben zu können.

Vorzugsweise erfolgt jedoch die Überstellung von in der Parkstation 28 zusammengestellten Stapelbildern mittels einer Transportvorrichtung 50, die einen zwischen den Führungsträgern 32 und 34 programmgesteuert sowohl anheb- und absenkbaren als auch aus einer im Bereich der Übernahmestation 26 liegenden Ausgangsstellung bis zur Parkstatian 28 horizontal verfahrbaren Stapelrechenwagen 52 aufweist. Mit seinen Rechenarmen 54 kann der Stapelrechenwagen 52 zur Übernahme des Plattengutes zwischen die Transportrollen der Parkstation 28 einfahren.

Die Stapelstation 30 weist einen Hubtisch 56 zur Übernahme der in der Parkstation 28 bereitgestellten Stapelbilder z.B. Plattenteilstapel 12 für den Aufbau von Plattenstapeln 18 - 24 auf. Dieser Hubtisch 56 befindet sich anfänglich in seiner oberen Ausgangsstellung und führt nach jeder Übernahme eines Satzes von Plattenteilstapeln 12 eine deren Höhe entsprechende Absenkbewegung aus.

Die Stapelstation 30 kann alternativ auch in anderer geigneter Weise zum Errichten von Plattenstapeln ausgelegt sein.

Die Einrichtung arbeitet programmgesteuert wie folgt:
Die zu einem Aufteilbild gehörenden Werkstückplatten 11 bzw. Plattenteilstapel 12 werden durch die Transportrollenbahn 10 von der betreffenden Plattenaufteilsäge in Richtung auf die Übergabestation 36 weggefördert, wobei sie vorzugsweise entlang der Förderstrecke vereinzelt werden.

In der Aufstapelvorrichtung 14 zu stapelndes Plattengut wird durch Aktivieren des Plattenanschlages 38 in der Übergabestation 36 gestoppt, wobei z.B. jeweils zwei Werkstückplatten 11 bzw. Plattenteilstapel 12 aneinander angelegt werden. Um diese anschiessend mit dem Übergabe- und Ausrichtlineal 40 der Parkstation 28 zuführen zu können, werden nunmehr sowohl in der Übergabestation 36 als auch in der Parkstation 28 Querförderrollen hochgefahren.

Beim Einschieben in die Parkstation 28 werden beide Werkstückplatten 11 bzw. Plattenteilstapel 12 zugleich zueinander kantenbündig ausgerichtet, wobei sie in der Parkstation 28 in die in Fig. 1 oben dargestellte Position geschobenwerden. Danach kehrt das Übergabe- und Ausrichtlineal 40 in seine in Fig. 1 gezeigte Ausgangslage zurück, und die Querförderrollen in beiden Stationen 28, 36 werden wieder abgesenkt.

Das danach in die Übergabestation 36 ein- und am Plattenanschlag 38 anlaufende Plattengut wird erneut in vorbeschriebener Weise der Parkstation 28 zugeführt, wobei die beiden zuerst eingeschobenen Stapelbilder zugleich in der Parkstation 28 weiter in Richtung auf die Stapelstation 30 verschoben werden, so dass sich nunmehr in dieser, was nicht gezeigt ist, insgesamt vier Stapelbilder z.B. Plattenteilstapel 12 befinden.

Nach Absenken der Querförderrollen werden diese Plattenteilstapel 12 gemeinsam entgegen der Förderrichtung der Transportrollenbahn 10 zur Anlage an den Ausrichtanschlag 46 gebracht, so dass der Parkstation 28 von neuem insgesamt vier Plattenteilstapel 12 in der erläuterten Weise zugeführt werden können.

Sind, wie im vorliegenden Fall gezeigt, insgesamt acht Plattenteilstapel 12 in der Parkstation 28 bereitgestellt, deren Querförderrollen abgesenkt sind und deren Transportrollen stillstehen, fährt der Stapelrechenwagen 52 in abgesenkter Stellung über die Stapelstation 30 hinweg und mit seinen Rechenarmen 54 zwischen die Transportrollen der Parkstation 28 hinein.

Durch Anheben des Stapelrechenwagens 52 werden anschliessend alle in der Parkstation 28 bereitgestellten Plattenteilstapel 12 von den Rechenarmen 54 aufgenommen, durch den Stapelrechenwagen 52 über den Hubtisch 56 der Stapelstation 30 transportiert und auf diesem gemeinsam abgestapelt, indem der Stapelrechenwagen 52 in seine in Fig. 1 gezeigte Ausgangslage zurückfährt und dabei die Plattenteilstapel 12 durch Anfahren an einem hochgefahrenen Abstreifrechen 48 von diesem heruntergeschoben werden.

Der Hubtisch 56 wird anschliessend so weit abgesenkt, dass im Verlauf eines weiteren, dem erläuterten Arbeitsspiel entsprechenden Arbeitsspieles wiederum ein in der Parkstation 28 bereitgestellter Satz von Plattenteilstapeln 12 zum gleichzeitigen Errichten von insgesamt acht Plattenstapeln 18 - 24 in der Stapelstation 30 kantenbündig abgestapelt werden kann, wobei das Übergabe- und Ausrichtlineal 40 das Plattengut an den Abstreifrechen 48 zum Ausrichten anlegt.

Es ist klar, dass sich auf die beschriebene Art und Weise auch nur ein einziger Plattenstapel errichten lässt, was dann angezeigt ist, wenn die betreffenden Werkstückplatten 11 ein entsprechend grosses Format besitzen.

Ist die gewünschte Anzahl von Werkstückplatten 11 zum Aufbau eines bzw. mehrerer Plattenstapel 18 - 24 auf dem Hubtisch 56 abgestapelt, wird dieser in seine Ausgangsstellung hochgesteuert und vom Stapelrechenwagen 52 werden der bzw. die Plattenstapel 18 - 24 übernommen und in der Übernahmestation 26 auf Transportrollen eines Schwerlastförderers 58 für den Abtransport abgesetzt.

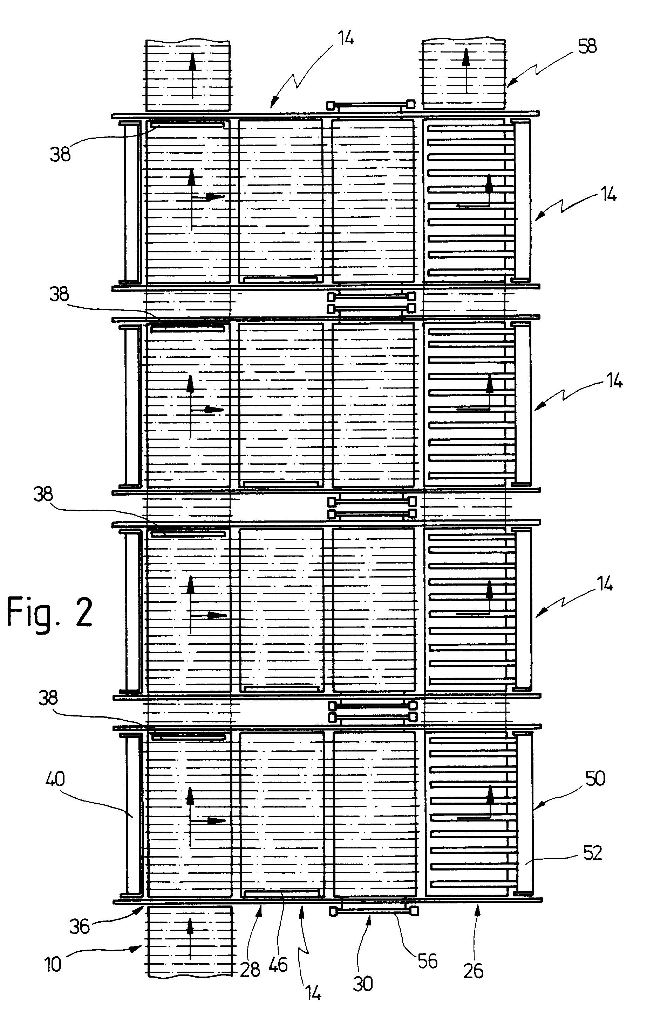

Wie Fig. 2 zeigt, können der Transportrollenbahn 10 beispielsweise auch mehrere, hintereinanderliegende Aufstapelvorrichtungen 14 zugeordnet sein, wobei diese zur Bereitstellung von Stapelbildern gleichen oder unterschiedlichen Formates vorgesehen sein können. In letzterem Falle wird durch ihren Plattenanschlag 38 ausgewählt, welche Stapelbilder den einzelnen Aufstapelvorrichtungen 14 zum Abstsapeln zugeführt werden sollen.

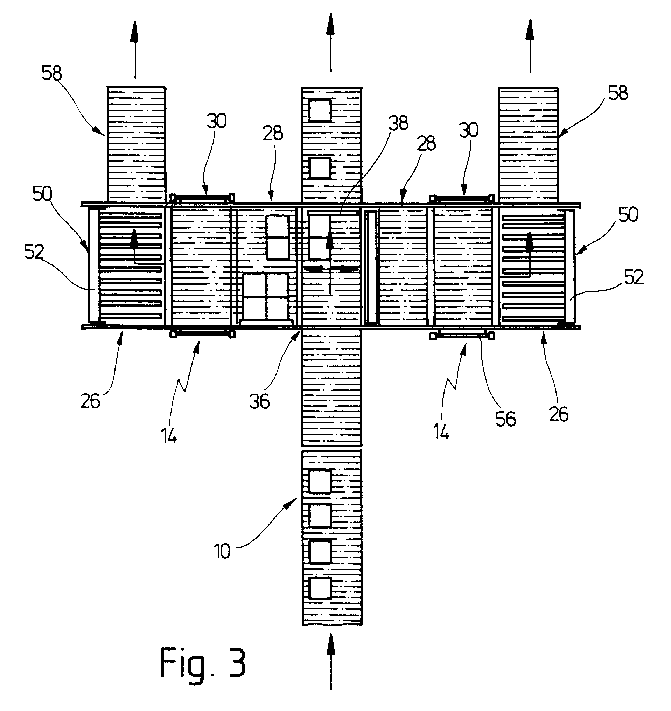

Eine weitere Möglichkeit des Einsatzes mehrerer Aufstapelvorrichtungen 14 ist durch die in Fig. 3 gezeigte, zur Transportrollenbahn 10 spiegelbildliche Anordnung von Aufstapelvorrichtungen 14 veranschaulicht.

Im Falle der Anordnungen von Aufstapelvorrichtungen 14 gemäss den Fig. 2 und 3 ist dabei gewährleistet, dass ohne jeglichen Zeitverlust auch bei Anfallen unterschiedlicher Plattenformate ein optimales Leistungsergebnis zum Errichten von Plattenstapeln 18 - 24 erzielt wird.

## Patentansprüche

1. Verfahren zum Errichten von Plattenstapeln (18, 20, 22, 24), die jeweils aus einer Vielzahl von aufeinandergestapelten Stapelbildern aufgebaut sind, die ihrerseits durch einzelne Werkstückplatten (11) oder durch aufeinanderliegende Plattenteilstapel (12) gleichen Formats gebildet sind, bei dem Stapelbilder (11 oder 12) entlang einer Förderstrecke (Transportrollenbahn 10) im Abstand hintereinander zu einer Stoppstelle (Plattenanschlag 38) gefördert und von dort zum Parken ausserhalb der Förderstrecke (Transportrollenbahn 10) quer zu ihrer Anlieferrichtung wegtransportiert werden, wobei durch den erneuten Antransport von Stapelbildern (11 oder 12) bereits geparkte, zueinander ausgerichtete Stapelbilder (11 oder 12) in Anlieferrichtung entsprechend verschoben und anschliessend eine vorbestimmte Anzahl geparkter, ausgerichtet aneinandergereihter Stapelbilder (11 oder 12) gemeinsam zur Bildung von Plattenstapeln (18 -24) abgestapelt werden, wobei nach kantenbündigem Abstapeln einer vorbestimmten Anzahl von Stapelbildern (11 oder 12) dadurch aufgebaute Plattenstapel (18-24) gemeinsam abtransportiert werden,
**dadurch gekennzeichnet,**
dass an der Stoppstelle (Plattenanschlag 38) der Förderstrecke (Transportrollenbahn 10) wenigstens zwei Stapelbilder (11 oder 12) aneinander angelegt sowie zueinander fluchtend ausgerichtet und anschliessend als Plattengruppe gemeinsam geparkt werden, dass danach erneut eine gleiche Anzahl von Stapelbildern (11 oder 12) zueinander fluchtend ausgerichtet und aneinandergelegt in Richtung auf die bereits geparkte Plattengruppe bewegt und an deren Stelle, diese entsprechend verschiebend, stillgesetzt wird und dass eine vorbestimmte Anzahl nebeneinander geparkter Plattengruppen vor Ankunft weiterer, in gleicher Anzahl zu parkender Plattengruppen parallel zur Förderstrecke (Transportrollenbahn 10) in eine Warteposition transportiert wird, worauf schliesslich alle geparkten Plattengruppen gemeinsam in eine Abstapelposisition (Stapelstation 30) verschiebbar sind.

2. Verfahren nach Anspruch 1, dadurch gekennzeichnet, dass geparkte Stapelbilder (11 oder 12) entgegen ihrer Anlieferrichtung entlang der Förderstrecke (Transportrollenbahn 10) in die Warteposition transportiert werden.

3. Verfahren nach Anspruch 1 oder 2, dadurch gekennzeichnet, dass Stapelbilder (11 oder 12) unterschiedlichen Formates entlang einer gemeinsamen Förderstrecke (Transportrollenbahn 10) transportiert und im Format voneinander abweichende Stapelbilder (11 oder 12) an diesen zugeordneten Stoppstellen (Plattenanschlag 38) entlang der Förderstrecke (Transportrollenbahn 10) programmgesteuert aufgehalten und zum Ausrichten, Parken und Abstapeln abtransportiert werden.

4. Einrichtung zur Durchführung des Verfahrens nach einem der vorhergehenden Ansprüche, mit einer Fördervorrichtung (Transportrollenbahn 10) für den Transport von hintereinanderliegenden Stapelbildern (11 oder 12) zu einer Stoppstelle (Plattenanschlag 38), von der sie, quer zur Förderrichtung, wenigstens einer Parkstation (28) zuführbar sind, in der angelieferte Stapelbilder (11 oder 12) bereitstellbar und mittels einer Transportvorrichtung (50) gemeinsam in einer Stapelstation (30) zum Errichten von Plattenstapeln (18-24) auf einen Hubtisch (56) abstapelbar und von dort einer an diese angeschlossenen Übernahmestation (26) zuführbar sind, dadurch gekennzeichnet, dass die Stapelbilder (11 oder 12) in der Parkstation (28) parallel zu deren Anlieferrichtung entlang der Förderstrecke (Transportrollenbahn 10) verlagerbar sind, wobei die grösste Verlagerungsstrecke durch einen stationären Ausrichtanschlag (46) begrenzt ist, und dass in der Stapelstation (30) errichtete Plattenstapel (18-24) durch die Transportvorrichtung (50) zugleich der Übernahmestation (26) zuführbar sind.

5. Einrichtung nach Anspruch 4, dadurch gekennzeichnet, dass die Parkstation (28) mit zwei durch Anheben und Absenken wahlweise aktivierbaren, sich zueinander senkrecht erstreckenden Rollenbahnen ausgestattet ist, von denen sich eine quer zur Förderrichtung der Fördervorrichtung (Transportrollenbahn 10) erstreckt.

6. Einrichtung nach Anspruch 4 oder 5, dadurch gekennzeichnet, dass die Partstation (28) ein über die Fördervorrichtung (Transportrollenbahn 10) bewegbares Übergabe- und Ausrichtglied (40) zum Einschieben von stillgesetzten Werkstückplatten (11) bzw. Plattenteilstapeln (12) in die Parkstation (28) aufweist.

7. Einrichtung nach einem der vorhergehenden Ansprüche 4 bis 6, dadurch gekennzeichnet, dass Parkstation (28), Stapelstation (30) und Übernahmestation (26) in einer Linie miteinander verkettet sind.

8. Einrichtung nach einem der vorhergehenden Ansprüche 4 bis 7, dadurch gekennzeichnet, dass die Transportvorrichtung (50) einen anheb- und absenkbaren sowie über die Parkstation (28), die Stapelstation (30) und die Übernahmestation (26) steuerbaren Stapelrechenwagen (52) aufweist, dass die Stapelstation (30) einen Hubtisch (56) aufweist, der zum Abstapeln von Plattenteilstapeln (12) absenkbar ist und dass zwischen Stapelstation (30) und Übernahmestation (26) ein anheb- und absenkbarer Abstreifrechen (48) vorgesehen ist, in welchen der Stapelrechenwagen (52) mit seinen Rechenarmen (54) eingreift.

9. Einrichtung nach Anspruch 10 oder 11, dadurch gekennzeichnet, dass für unterschiedliche Werkstück plattenformate bzw. Plattenteilstapelformate zumindest an einer Längsseite der Fördervorrichtung (Transportrollenbahn 10) hintereinander aus einer Parkstation (28), Stapelstation (30) und Übernahmestation (26) bestehende Aufstapelvorrichtungen (14) vorgesehen sind.

10. Einrichtung nach einem der vorhergehenden Ansprüche 7 bis 9, dadurch gekennzeichnet, dass, bezogen auf die Fördervorrichtung, (Transportrollenbahn 10) mindestens zwei aus einer Parkstation (28), Stapelstation (30) und Übernahmestation (26) bestehende Aufstapelvorrichtungen (14) einander spiegelbildlich zugeordnet sind.

## Claims

1. Method of assembling stacks of panels (18, 20, 22, 24), each composed of a plurality of superposed stack patterns that are formed by individual workpiece panels (11) or by superposed partial panel stacks (12) of equal format, where stack patterns (11 or 12) are fed at equal distances one behind the other along a conveying path (roller conveyor 10) to a stop position (panel stop 38) and from the latter, transversely to their initial feeding direction, to a parking position outside the conveying path (roller conveyor 10), and where due to the arrival of new stack patterns (11 or 12) previously parked, mutually aligned stack patterns (11 or 12) are correspondingly displaced in the feeding direction, whereafter a predetermined number of parked stack patterns (11 or 12), that are positioned one behind the other in proper alignment, are jointly destacked for the assembly of panel stacks (18-24), and where after flush-edge destacking of a predetermined number of stack patterns (11 or 12), any panel stacks (18-24) thereby built up are jointly carried off,
characterised in that
at least two stack patterns (11 or 12) are positioned one adjacent the other and are mutually aligned by their edges at the stop position (panel stop 38) of the conveying path (roller conveyor 10), and are then parked together as a panel group, that thereafter the same number of stack patterns (11 or 12) are moved, in mutually aligned and flush arrangement, in a direction toward the panel group previously parked and are stopped in the latter's place, thereby displacing it by a corresponding length, and that prior to the arrival of further panel groups to be parked in the same way, a predetermined number of adjacently parked panel groups is transported in parallel to the conveying path (roller conveyor 10) into a waiting position, whereupon finally all parked panel groups can be displaced together into a destacking position (stacking station 30).

2. Method according to claim 1, characterised in that parked stack patterns (11 or 12) are transported into the waiting position along the conveying path (roller conveyor 10) in a direction opposite to their feeding direction.

3. Method according to claim 1 or 2, characterised in that stack patterns (11 or 12) of different format are transported along a common conveying path (roller conveyor 10) and that stack patterns (11 or 12) that differ in format one from the other are stopped in a program-controlled manner at appropriately assigned stop positions (panel stop 38) along the conveyor path (roller conveyor 10) and are then carried off for aligning, parking and destacking.

4. Device for carrying out the method according to any of the preceding claims, comprising feeding means (roller conveyor 10) for feeding stack patterns (11 or 12), arranged one behind the other, to a stop position (panel stop 38), from where they can be fed, transversely to the conveying direction, at least to one parking station (28), where the delivered stack patterns (11 or 12) can be presented and can be destacked commonly, in a stacking station (30), by a conveyor means (50) onto an elevating platform (56) for assembling panel stacks (18-24), and can then be fed to a receiving station (26) connected to the lifting platform, characterised in that the stack patterns (11 or 12) can be displaced in the parking station along the conveying path (roller conveyor 10) in parallel to their feeding direction, the greatest length of displacement being limited by a stationary aligning stop (46), and that panel stacks (18-24) assembled in the stacking station (30) can be simultaneously fed to the receiving station (26) by the conveying means (50).

5. Device according to claim 4, characterised in that the parking station (28) is equipped with two roller trains, that extend at a right angle one to the other and can be selectively activated by lifting and lowering, one of the said roller trains extending transversely to the conveying direction of the conveyor means (roller conveyor 10).

6. Device according to claim 4 or 5, characterised in that the parking station (28) comprises a transfer and aligning element (40), that can be moved across the conveying means (roller conveyor 10), and that serves for pushing stopped workpiece panels (11) or partial panel stacks (12) into the parking station (28).

7. Device according to any of the preceding claims 4 to 6, characterised in that the parking station (28), the stacking station (30) and the receiving station (26) are interlinked to one line.

8. Device according to any of the preceding claims 4 to 7, characterised in that the conveyor means (50) comprises a panel rake carriage (52) that can be lifted and lowered and can be controlled by the parking station (28), the stacking station (30) and the receiving station (26), that the stacking station (30) comprises an elevating platform (56) that can be lowered for destacking partial panel stacks (12), and that a stripping rake (48), that can be lifted and lowered and which is engaged by the rake arms (54) of the stack rake carriage (52), is arranged between the stacking station (30) and the receiving station (26).

9. Device according to claim 10 or 11, characterised in that stack assembly devices (14) comprising a parking station (28), a stacking station (30) and a receiving station (26) are arranged one behind the other on at least one longitudinal side of the conveyor means (roller conveyor 10), for different workpiece panel formats and/or partial panel stack formats.

10. Device according to any of the preceding claims 7 to 9, characterised in that, related to the conveying means (roller conveyor 10), at least two stack assembly devices (14), comprising a parking station (28), a stacking station (30) and a receiving station (26), are associated one to the other in mirrored arrangement.

## Revendications

1. Procédé pour établir des piles de plaques (18, 20, 22, 24) réalisées respectivement avec un certain nombre de formes de piles empilées, réalisées elles-mêmes par différentes plaques porte-pièces (11) ou des piles partielles de plaques (12) de même format, par lequel des formes de piles (11 ou 12) sont transportées le long d'une voie de convoyage (transporteur à galets 10) à une certaine distance les unes des autres vers un bloqueur (butée de piles 38) et de là transportées transversalement à la direction d'arrivée vers le stationnement à l'extérieur de la voie de convoyage (transporteur à galets 10), les formes de piles (11 ou 12) déjà stationnées et alignées les unes par rapport aux autres étant déplacées respectivement en direction d'arrivée par le nouveau transport de formes de piles (11 ou 12) et ensuite un nombre prédéfini de formes de piles (11 ou 12) déjà stationnées, alignées et contiguës étant désempilées en commun pour former des piles de plaques (18-24), et après le désempilage de façon affleurée d'un nombre prédéfini de formes de piles (11 ou 12), les piles de plaques (18-24) ainsi réalisées étant enlevées en commun,
**caractérisé en ce que**
au point de blocage (butée de piles 38) de la voie de convoyage (transporteur à galets 10) au moins deux formes de piles (11 ou 12) sont mises en contact, alignées et affleurées et ensuite stationnées en commun comme groupes de plaques, qu'ensuite un même nombre de formes de piles (11 ou 12) sont alignées à fleur, mises en contact et déplacées en direction du groupe de plaques déjà stationnées et, en déplaçant ces dernières, stationnées à leur place et que un nombre prédéfini de groupes de plaques stationnés l'un à côté de l'autre sont transportés dans une position d'attente, avant l'arrivée d'autres, au même nombre que les groupes de plaques à stationner et ce en parallèle à la voie de convoyage (transporteur à galets 10), tous les groupes de plaques stationnés étant déplaçables en commun dans une position de désempilage (station d'empilage 30).

2. Procédé selon la revendication 1, caractérisé en ce que des formes de piles (11 ou 12) stationnées sont transportées dans la position d'attente en sens inverse de leur direction d'arrivée le long de la voie de convoyage (transporteur à galets 10).

3. Procédé selon la revendication 1 ou 2, caractérisé en ce que des formes de piles (11 ou 12) de différents formats sont transportées le long d'une voie de convoyage commune (transporteur à galets 10) et des formes de piles à formats divergents (11 ou 12) sont arrêtées en fonction du programme sur les bloqueurs adéquats (butée de plaques 38) le long de la voie de convoyage (transporteur à galets 10) et ensuite à nouveau transportées pour l'alignement, le stationnement et le désempilage.

4. Dispositif pour la mise en oeuvre du procédé selon l'une des revendications précédentes avec un convpyeur (transporteur à galets 10) pour le transport de formes de piles (11 ou 12) placées les unes derrière les autres vers un bloqueur (butée de plaques 38), à partir duquel elles peuvent être amenées, transversalement à la direction de convoyage, à une station de stationnement (28) dans laquelle des formes de piles (11 ou 12) livrées peuvent être mises à disposition et au moyen d'un convoyeur (5) empilées en commun dans une station d'empilage (30) pour établir des piles de plaques (18-24) sur une table élévatrice et de là amenées à une station de réception (26) raccordée à cette dernière, caractérisé en ce que les formes de piles (11 ou 12) peuvent être déplacées dans la station de stationnement (28) en parallèle à leur direction d'arrivée le long de la voie de convoyage (transporteur à galets 10), le trajet de déplacement le plus long étant limité par une butée d'alignement (46) stationnaire et en ce que les piles de plaques (18-24) établies dans la station d'empilage (30) peuvent être amenées dans la station de réception (26) àu moyen du convoyeur (50).

5. Dispositif selon la revendication 4, caractérisé en ce que la station de stationnement (28) est équipée de deux transporteurs à galets perpendiculaires l'un par rapport à l'autre et activables au choix par soulèvement ou abaissement, l'un des transporteurs s'étendant transversalement à la direction de convoyage du convoyeur (transporteur à galets 10).

6. Dispositif selon la revendications 4 ou 5, caractérisé en ce que la station de stationnement (28) présente un élément de transfert et d'alignement (40) déplaçable au moyen du convoyeur (transporteur à galets 10) pour l'introduction de plaques porte-pièces arrêtées (11) ou de piles partielles de plaques (12) dans la station de stationnement (28).

7. Dispositif selon l'une des revendications précédentes 4 à 6, caractérisé en ce que la station de stationnement (28), la station d'empilage (30) et la station de réception (26) s'enchaînent sur une ligne.

8. Dispositif selon l'une des revendications 4 à 7, caractérisé en ce que le convoyeur (50) présente un chariot porte-racleurs de piles (52) pouvant être levé et baissé et étant commandable à travers la station de stationnement (28), la station d'empilage (30) et la station de réception (26), en ce que la station d'empilage présente une table élévatrice (56) pouvant être abaissée pour le désempilage de piles partielles de plaques (12) et que entre la station d'empilage (30) et la station de réception (26) est prévu un racloir (48) levable et abaissable dans lequel engrène le chariot porte-racleurs (52) avec ses bras (54).

9. Dispositif selon la revendication 10 ou 11, caractérisé en ce que, pour différents formats de plaques porte-pièces ou formats de piles partielles de plaques, sont prévus, au moins sur un côté longitudinal du convoyeur (transporteur à galets 10), des dispositifs d'empilage (14) disposés les uns derrière les autres et comprenant une station de stationnement (28), une station d'empilage (30) et une station de réception (26).

10. Dispositif selon l'une des revendications précédentes 7 à 9, caractérisé en ce que au moins deux dispositifs d'empilage (14), comprenant respectivement une station de stationnement (28), une station d'empilage (30) et une station de réception (26), sont disposés de façon inversée par rapport au convoyeur (transporteur à galets 10).
